# EUROPEAN PATENT APPLICATION

(11) **EP 3 808 496 A1**
(43) Date of publication of application: **21.04.2021**
(21) Application number: 19203734.9
(22) Date of filing: 17.10.2019
(51) Int. Cl.: B23P 19/00, B25J 15/00, B25J 15/06

(54) **GRIPPER FOR HOLE COVER AUTOMATION**

(71) Applicant: Nitto Belgium NV, 3600 Genk (BE)
(72) Inventor: LUDWIG, Michael, 47059 Duisburg (DE); PARLOO, Eli, 3600 Genk (BE)
(74) Representative: Grünecker Patent- und Rechtsanwälte PartG mbB

(57) **Abstract**

The present invention refers to a gripper (1) for attaching an adhesive pad to a vehicle component comprising a holding element (2) adapted to release the adhesive pad from a liner and to hold the adhesive pad during the transfer to an attaching position. It is the objective technical problem of the present invention to provide a gripper for attaching an adhesive pad to a vehicle component which avoids the disadvantages of the devices known from the state of the art. Especially, the gripper should be able to be used with any adhesive pads without requiring any special stiffness or rigidity. This technical problem is solved by a gripper further comprising an attaching element (3) which is adapted to apply an attaching force to the adhesive pad when the adhesive pad is in the attaching position.

## Description

The present invention refers to a gripper for attaching an adhesive pad to a vehicle component comprising a holding element adapted to release the adhesive pad from a liner and to hold the adhesive patch during the transfer to an attaching position.

In automotive production processes, particularly in the assembly and processing of car bodies, a large number and variety of openings in vehicle components or car body parts are required, for example for fixation of further components, to provide access to car body cavities, to facilitate painting and waxing steps and/or for anti-corrosion purposes.

To avoid ingression of dirt and moisture and thereby prevent corrosion throughout the vehicle lifetime, and in order to decrease the noise level within the vehicle to acceptable levels, it is known to close the openings in the further production process by hole covering means, for example by elastic plugs. Such plugs require manual insertion.

It is therefore also known to use adhesive pads for the hole covering. Such adhesive pads used as hole covers should ideally secure permanent sealing against humidity and dirt, and exhibit favorable sound blocking properties, excellent chemical resistance, temperature resistance, and mechanical properties (i.e. ability to withstand mechanical impacts and a high flexibility to enable application on uneven surfaces).

It is known to use multilayered patches as hole covers, wherein the multilayered patch comprises a first layer and a pressure-sensitive adhesive layer. The pressure-sensitive adhesive layer comprises a mixture of: a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins. The first layer can comprise a metal or a metal alloy, or it can comprise a polymer and has a strain at break according to ASTM D638 of at least 10%. A release liner can be provided on at least a part of the surface of the pressure-sensitive adhesive layer. In order to provide for a sufficient sound and vibration damping function, the multilayer patch preferably exhibits a total basis weight of 0.4 to 5 kg/m2, more preferably between 1.4 to 3.8 kg/m2, which may be suitably adjusted by selecting the thickness and the material of each of the layers. Preferably, the basis weight of the first layer is within the range of 0.05 to 4.95 kg/m2, especially preferably 0.2 to 4 kg/m2, such as from 0.4 to 3.5 kg/m2 or from 0.6 to 3 kg/m2. The basis weight of the pressure-sensitive adhesive layer is preferably in the range of 0.05 to 0.5 kg/m2, such as 0.1 to 0.4 kg/m2.

Preferably, one or more additional layers may be provided between the first layer and the pressure-sensitive adhesive layer or on the surface of the first layer opposed to the pressure-sensitive adhesive layer side. The additional intermediate layers may be composed of structural damping material (which may include a viscoelastic material, preferably a rubber, more preferably butyl rubber, or a bitumen based material, preferably asphalt). Layers applied on the surface of the first layer opposed to the pressure-sensitive adhesive layer side may include anti-corrosion coating layers.

A preferred multilayered patch used as hole cover comprises a second layer between and in contact with the first layer and the pressure-sensitive adhesive layer. If present, the basis weight of the second layer is preferably less than 1.5 kg/m2, further preferably within the range of 0.3 to 1.45 kg/m2, especially preferably 0.5 to 1.4 kg/m2. If the first layer comprises a polymer, it may be further preferred that the second layer comprises a mixture of the materials constituting the first layer and the pressure-sensitive adhesive layer. For example, it may be preferred that the second layer consists of a mixture of the first layer material and the pressure-sensitive adhesive layer material at a volume ratio of 10:90 to 95:5, more preferably 50:50 to 90:10, especially preferably 60:40 to 85:15. This configuration is particularly preferred when using a thermoplastic elastomer in the first layer, since it further improves the compatibility between the first layer and the pressure-sensitive adhesive layer (thereby preventing delamination) and reduces migration of resin out of the pressure-sensitive adhesive layer which may result in loss of adhesion upon aging. In addition, the second layer can then be easily formed by recycling of discarded sheet material after die-cutting of sheet material, for example by co-extrusion of the discarded material. In such configurations, it may be preferable that the patch consists of the first layer, the second layer and the pressure-sensitive adhesive layer, optionally with a release liner being provided on at least a part of the surface of the pressure-sensitive adhesive layer.

A particularly preferred embodiment of the multilayer patch has a three-layer configuration comprising a first layer, a pressure-sensitive adhesive layer, a second layer between and in contact with the first layer and the pressure-sensitive adhesive layer, and an optional release liner. The first layer comprises styrene-ethylene/butylene-styrene (SEBS) at a content of 5 to 30% by weight, an elastomer at a content of 5 to 15% by weight, a filler at a content of 60 to 90% by weight, and an optional colorant at a content of 0 to 5% by weight, each based on the total weight of the first layer. The pressure-sensitive adhesive layer comprises a mixture of: a styrene-based triblock copolymer selected from styrene-butadiene-styrene (SBS) or styrene-ethylene/butylene-styrene (SEBS), a styrene-based diblock copolymer, the total content of the styrene-based triblock copolymer and a styrene-based diblock copolymer being in the range of 30 to 60% by weight based on the total weight of the pressure-sensitive adhesive layer, a hydrocarbon resin at a content in the range of 10 to 45% by weight and a filler at a content of 10 to 38% by weight, each based on the total weight of the pressure-sensitive adhesive layer. Adhesive hole covers comprising said configuration enable effective sealing, exhibit remarkable damping properties (which may be easily varied by selection of the first layer thickness), excellent chemical resistance, temperature resistance, adhesive properties (both on oily or non-oily metal surfaces and on coated metal surfaces) and mechanical properties (i.e. balance of flexibility and structural strength), which may be produced in a simple and inexpensive manner since the same equipment may be used for the preparation of each layer, and which may be fully recycled, contrary to adhesive hole cover patches known in the art.

In order to save manpower and time, such adhesive pads are preferably applied in an automated process, e.g. by industrial robots. An attaching device for attaching an adhesive pad to a vehicle component is for example known from DE 202017102581 U1. This device comprises a plurality of grippers which are attached to an axis element that comprises an interface which can be connected to an industrial robot. Each gripper comprises a telescopic gripper arm which is provided on its front end with a suction cup. Each suction cup is connected to a vacuum source. In the application process, the gripper arm is moved toward an adhesive pad which is arranged on a liner and the suction cup is placed on the corresponding adhesive pad. A vacuum is applied to the suction cup, so that the adhesive pad is held by the suction cup. The gripper device is then transferred to an attaching position, i.e. the position on the vehicle component where the adhesive pad should be attached. The adhesive pad is then placed on the vehicle component via the gripper arm with the suction cup and the attaching force is applied by the suction cup.

In order to provide a good distribution of the attaching force, the adhesive pad must have a certain stiffness. Furthermore, problems with secure attaching can arise if the surface of the vehicle component is irregular or very rough and the adhesive pad may loosen during use.

It is therefore the objective technical problem of the present invention to provide a gripper for attaching an adhesive pad to a vehicle component which avoids the disadvantages of the devices known from the state of the art. Especially, the gripper should be able to be used with any adhesive pads without requiring a special stiffness or rigidity and should be able to cope with tolerances in the surface of the vehicle component.

This technical problem is solved by a gripper further comprising an attaching element which is adapted to apply an attaching force to the adhesive pad when the adhesive pad is in the attaching position. Therefore, with a gripper according to the present invention, the attaching force which is necessary to attach the adhesive pad to the vehicle component, is applied by the attaching element. Therefore, the adhesive pad must not fulfill any special requirements regarding rigidity or stiffness of the material used. This allows a broader use of materials.

According to an embodiment of the present invention, the holding element and the attaching element are separate components. In this case, the holding element can be optimized for holding the adhesive pad whereas the attaching element can be optimized for applying the attaching force.

In a further aspect, the holding element can be connected to a vacuum source. In this case, the adhesive pad is held by the holding element via a vacuum. This allows the adhesive pad to be securely and gently held with uniform pressure distribution during holding.

Preferably, the holding element comprises a suction cup. The suction cup makes a gentle and secure holding of the adhesive pad possible. The adhesive pad can be easily removed from a liner, transferred to an attaching position and placed on the attaching position without applying unnecessarily high forces.

In still a further embodiment, the attaching element comprises an elastic ring. Due to the elasticity of the elastic ring of the attaching element, tolerances or an uneven surface of the vehicle component in the region of the attaching position can be easily compensated and a secure and uniform attaching of the adhesive pad to the vehicle component is made possible.

Preferably, the attaching element can be made from an elastomeric material. The necessary elasticity of the attaching element is then reached. Preferably, the attaching element has a hardness in a range from 20 to 90 Shore A, preferably in a range from 40 to 85 Shore A, more preferably in a range from 60 to 80 Shore A. Furthermore the attaching element can be build on a multiply setup (or multilayer structure) combining different hardness to provide or fine-tune the necessary overall performance.

In order to provide a secure and uniform attaching of the adhesive pad to the vehicle component, the holding element and the attaching element are preferably concentric.

In still a further embodiment, the circumference of the holding element is equal to or bigger than the circumference of the attaching element. In this case, the holding element forms the complete front surface of the gripper which is facing in the adhesive pad. The attaching element is arranged behind the holding element. That means, when the adhesive pad is held by the gripper, the holding element is arranged between the adhesive pad and the attaching element. The attaching force is then transferred from the attaching element via the holding element to the adhesive pad. This arrangement has the advantage that the suction force, that is the vacuum, that holds the adhesive pad, is applied over a large surface of the adhesive pad which prevents deformation of the adhesive pad.

However, it is also possible, that the attaching element surrounds the holding element. In this case, an inner circumference of the attaching element is equal to or bigger than an outer circumference of the holding element. This has the advantage of directly transmitting the attaching force from the attaching element to the adhesive pad.

In still a further embodiment, the holding element and the attaching element are arranged on a common movable cylinder. The attaching element and the holding element are fixedly arranged on the cylinder and the necessary movements for picking up the adhesive pad from a liner and moving the adhesive pad to the attaching position are performed by the movable cylinder.

Furthermore, the present invention also refers to a gripping device for attaching at least two adhesive pads to a vehicle component.

The objective technical problem for the gripping device is also to provide a device for attaching an adhesive pad to a vehicle component which overcomes the disadvantages of the devices known from the state of the art. Especially, the gripping device should allow an automated application of a plurality of adhesive pads in one cycle without requiring the adhesive pads to be of any particular material.

This object is solved by a gripping device comprising at least two grippers as described in claims 1 to 11. With such a gripping device, at least two adhesive pads can be attached in one cycle. The gripping device picks up the adhesive pads via the two grippers. As described above, each gripper comprises a holding element and an attaching element. The holding elements hold the adhesive pads during removal from a liner, transfer the adhesive pads to an attaching position and position the adhesive pads on the attaching position. However, the attaching force which is applied to the adhesive pads when they are positioned on the attaching position on the vehicle component is applied by the attaching element. This leads to uniform distribution of the attaching force and secure attachment of the adhesive pads to the vehicle component.

Preferably, the gripping device comprises twelve individual grippers. Such an arrangement allows an even larger number of adhesive pads to be applied during one cycle.

In the following, the invention is described in more detail with the aid of figures.
Fig. 1 shows a perspective view of a gripper according to the present invention,
Fig. 2 shows a sectional view of a part of the gripper of Fig. 1 along line II-II,
Fig. 3 shows a perspective view of a gripping device with twelve grippers according to Fig. 1 and
Fig. 4 shows a front view of the gripping device of Fig. 3.

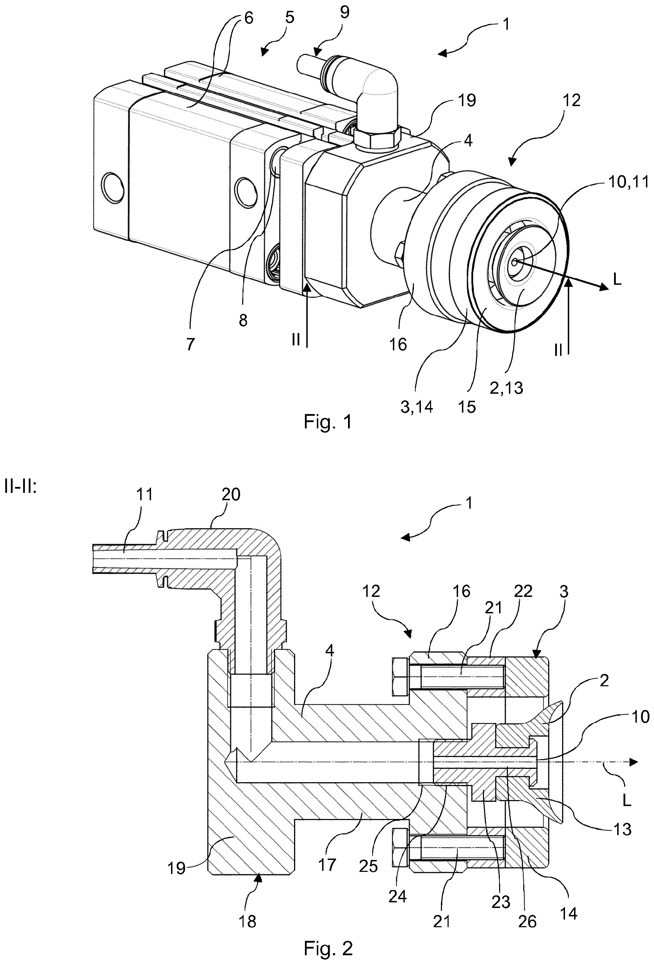

Fig. 1 shows a gripper 1 for attaching an adhesive element to a vehicle component according to the present invention in a perspective view. The gripper 1 comprises a holding element 2 and an attaching element 3. The holding element 2 and the attaching element 3 are fixed on a cylinder 4. The cylinder 4 is telescopically connected to a guiding system 5. The cylinder 4 can therefore be moved in both directions along a longitudinal axis L of the guiding system 5. The guiding system 5 comprises two guiding plates 6. These guiding plates 6 form guide channels 7. The cylinder 4 is connected with guide rods 8. The guide rods 8 are movably received in the guide channels 7. The guide channels 7 and the guide rods 8 allow the reciprocal movement of the cylinder 4 in the guiding system 5.

The holding element 2 comprises a suction cup 13. The holding element 2 as well as the suction cup 13 are arranged on a front end of the cylinder 4 facing away from the guiding system 5. The holding element 2 is connected to a vacuum source 9. For this purpose, an opening 10 is provided in the middle of the suction cup 13. The opening 10 forms the entry into a vacuum channel 11. The vacuum channel 11 connects the holding element 2 with the vacuum source 9.

The attaching element 3 is also attached to the front end 12 of the cylinder 4. The attaching element 3 comprises a cylindrical ring 14. At least the cylindrical ring 14 of the attaching element 3 surrounds the suction cup 13. Therefore, an inner circumference of the cylindrical ring 14 is bigger than or equal to the outer circumference of the suction cup 13. On its front end facing away from the cylinder 4, the attaching element 3 is provided with an attaching surface 15. At least the cylindrical ring 14 of the attaching element 3 is elastic and preferably made from an elastomeric material. The hardness of the elastomeric material lies in a range from 20 to 90 Shore A, preferably 40 to 85 Shore A, more preferably 60 to 80 Shore A. Furthermore, the attaching element or the cylindrical ring can be build on a multiply setup (or multilayer structure) combining different hardness to provide or fine-tune the necessary overall performance

However, it would also be possible for the outer circumference of the suction cup to be larger than the inner circumference of the holding element, so that the suction cup overlaps with the attaching surface of the attaching element, that is overlaps with the cylindrical ring.

In order to facilitate the attachment of the suction cup 13 and the cylindrical ring 14 to the cylinder 4, the cylinder 4 is provided with an attaching plate 16 on its front end. The attaching plate 16 and the holding element 2 preferably have a circular cross-section in the longitudinal direction L; the attaching element 3 has an annular cross-section in the longitudinal direction L.

Fig. 2 shows a sectional view of the front part of the gripper 1 along line II-II as shown in Fig. 1. Fig. 2 therefore shows the cylinder 4 with the holding element 2 and the attaching element 3 fixed to cylinder 4 and the vacuum channel 11 leading to the vacuum source. The cylinder 4 has a thinner middle section 17. This middle section 17 has a tube-like shape. The cylinder 4 is provided with the attaching plate 16 on its front end 12. On its back end 18, which faces the guiding system 5, the cylinder 4 is provided with an end plate 19 (see also Fig.1). The vacuum channel 11 starts at the surface of the attaching plate 16 which faces the holding element 2 and extends along the longitudinal axis L towards the end plate 19. In the end plate 19, the vacuum channel 11 bends towards a side of the end plate 19. A tube 20 is attached to the inside of end plate 19 which connects the cylinder 4 to the vacuum source (not shown).

The holding element 2 and the attaching element 3 are fixed to the attaching plate 16 of the cylinder 4. The attaching element 3 comprises the cylindrical ring 14 which is connected to the cylinder 4 via connection screws 21. The connection screws 21 are uniformly distributed around the circumference of the cylindrical ring 14. Preferably, a spacer 22 is arranged between the cylindrical ring 14 and the attaching plate 16. Other attaching methods for fixing the attaching element to the cylinder are also possible. For example, the attaching element could be attached to the cylinder via an adhesive.

The holding element 2 comprises the suction cup 13 and a screw element 23 for attaching the suction cup 13 to the end plate 16 of the cylinder 4. This screw element 23 is fixed to the suction cup 13 and comprises a thread 24 which cooperates with a corresponding thread 25 in the vacuum channel 11 of the cylinder 4. The screw element 23 is provided with a channel 26 which connects the suction cup 13 to the vacuum channel 11. The front end of channel 26 forms the opening 10 for the vacuum channel 11. As can be clearly seen in Fig. 2, the suction cup 13 of the holding element 2 protrudes from the cylindrical ring 14 of the attaching element 3. The holding element 2, in particular the suction cup 13 can then easily grip an adhesive pad arranged on a liner.

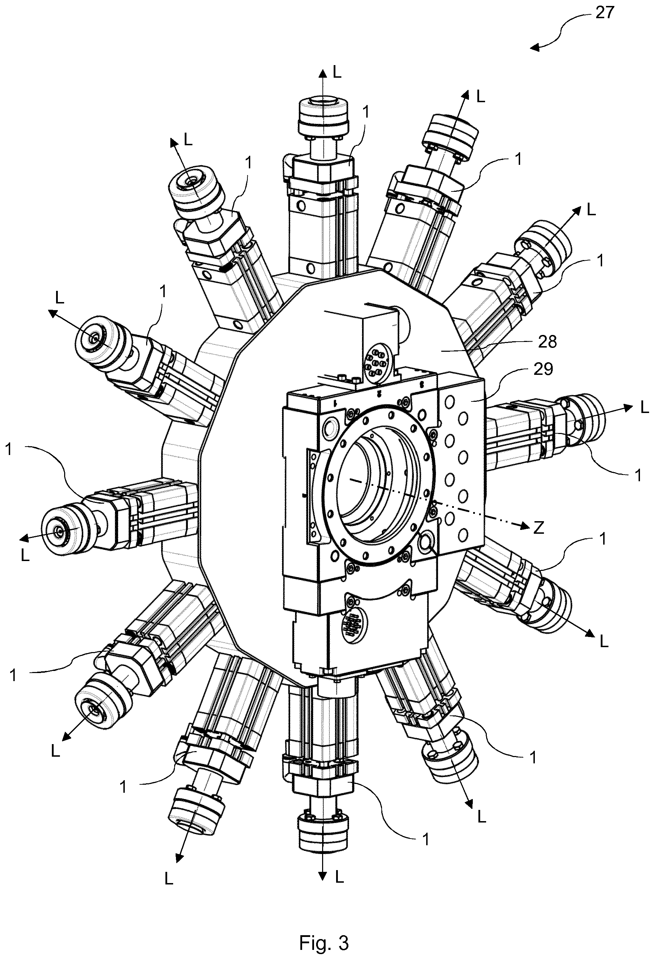

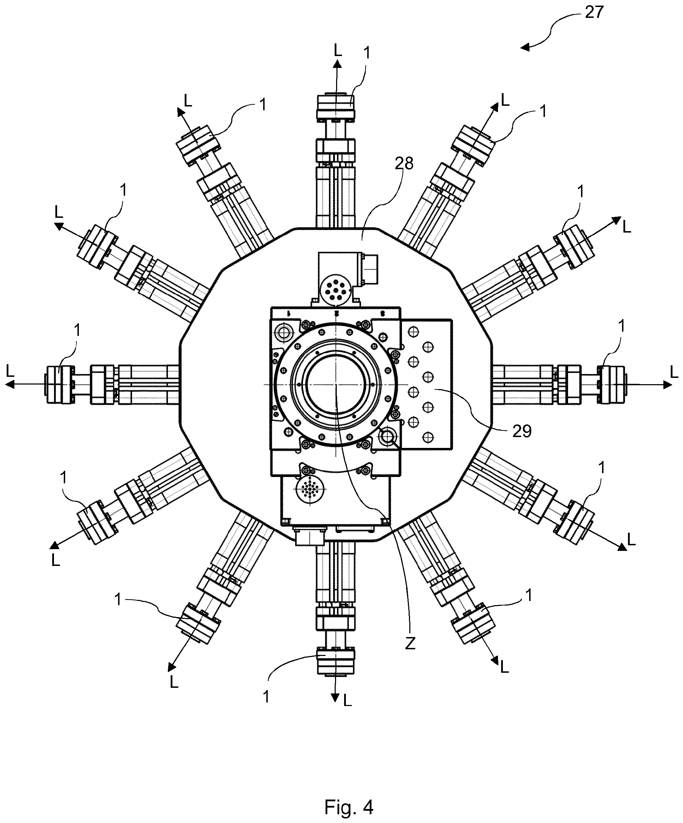

Fig. 3 shows a perspective view of a gripping device 27 for attaching a plurality of adhesive pads to a vehicle component. Fig. 4 shows a front view of this gripping device 27. The gripping device 27 comprises a central mounting plate 28. A plurality of grippers 1 as shown in Fig. 1 and 2 are arranged on this mounting plate 28. In the present embodiment, the gripping device 27 comprises twelve grippers 1. The grippers 1 are uniformly distributed around the circumference of the mounting plates 28. The longitudinal axis L of each gripper 1 is perpendicular to a central axis Z of the gripping device 27. As the twelve grippers 1 are uniformly distributed around the circumference of the mounting plates 28, the longitudinal axes L of adjacent grippers 1 enclose an angle of 30°. The gripping device 27 is provided with an interface 29 for a connection with an automated system, for example an industrial robot. This interface 29 is preferably designed as a robot flange.

In the following, a method for attaching adhesive pads to a vehicle component with the above described gripper 1 and the gripping device 27 is described. The adhesive pads are provided on a liner. The cylinder 4 is extended from the guide system 5 so that the suction cup 13 of the holding element 2 contacts the adhesive pad. A vacuum is then applied to the suction cup 13 via the vacuum channel 11 so that the adhesive pad is held by the suction cup 13 of the holding element 2 and can be removed from the liner. The gripper 1 and/or the gripping device 27 is then moved to transfer the adhesive pad to the attaching position on the vehicle component. During this time, the adhesive pad is held via the suction cup 13 of the holding element 2. The adhesive pad is then positioned on the attaching position on the vehicle component while it is held by the suction cup 13 of the holding element 2. When the adhesive pad is arranged at the attaching position on the vehicle component, the cylinder 4 is further extended so that the cylindrical ring 14 of the attaching element 3 applies an attaching force to the adhesive pad. Due to this attaching force, the adhesive pad is attached to the vehicle component. The vacuum is then removed and the cylinder 4 is retracted so that the cylindrical ring and the suction cup are removed from the adhesive pad and a new attaching process can start.

In the embodiment shown, the outer diameter of the suction cup of the holding element is smaller than an inner diameter of the cylindrical ring of the attaching element. However, it is also possible that the outer diameter of the suction cup is larger than the inner diameter of the cylindrical ring. In this case, the cylindrical ring contacts the outer surface of the suction cup and the attaching force is transmitted from cylindrical ring of the attaching element via the suction cup to the adhesive pad.

### List of Reference signs

- 1: gripper
- 2: holding element
- 3: attaching element
- 4: cylinder
- 5: guiding system
- 6: guiding plates
- 7: guide channel
- 8: guide rods
- 9: vacuum source
- 10: opening
- 11: vacuum channel
- 12: front end cylinder
- 13: suction cup
- 14: cylindrical ring
- 15: attaching surface
- 16: attaching plate
- 17: middle section cylinder
- 18: back end cylinder
- 19: end plate
- 20: tube
- 21: screw
- 22: spacer
- 23: screw element
- 24: thread holding element
- 25: thread vacuum channel
- 26: channel
- 27: gripping device
- 28: mounting plate
- 29: interface

- L: longitudinal axis gripper
- Z: central axis gripping device

## Claims

1. Gripper (1) for attaching an adhesive pad to a vehicle component comprising a holding element (2) adapted to release the adhesive pad from a liner and to hold the adhesive pad during the transfer to an attaching position, **characterized in that** the gripper (1) further comprises an attaching element (3) which is adapted to apply an attaching force to the adhesive pad when the adhesive pad is in the attaching position.

2. Gripper (1) according to claim 1, **characterized in that** the holding element (2) and the attaching element (3) are separate components.

3. Gripper (1) according to claim 1 or 2, **characterized in that** the holding element (2) is connected to a vacuum source (9).

4. Gripper (1) according to any of the preceding claims, **characterized in that** the holding element (2) comprises a suction cup (13).

5. Gripper (1) according to any of the preceding claims, **characterized in that** the attaching element (3) comprises an elastic ring (14).

6. Gripper (1) according to claim 5, **characterized in that** the attaching element (3) is made from an elastomeric material.

7. Gripper (1) according to claim 6 or 7, **characterized in that** the attaching element (3) has a Shore hardness in a range from 20 to 90 Shore A, preferably in a range from 40 to 85 Shore A, more preferably in a range from 60 to 80 Shore A.

8. Gripper (1) according to any of the preceding claims, **characterized in that** the holding element (2) and the attaching element (3) are concentric.

9. Gripper (1) according to any of the preceding claims, **characterized in that** the circumference of the holding element (2) is bigger than or equal to the circumference of the attaching element (3).

10. Gripper (1) according to any of claims 1 to 8, **characterized in that** the attaching element (3) surrounds the holding element (2).

11. Gripper (1) according to any of the preceding claims, **characterized in that** the holding element (2) and the attaching element (3) are arranged on a common movable cylinder (4).

12. Gripping device (27) for attaching at least two adhesive pads to a vehicle component comprising at least two grippers (1) according to claims 1 to 11.
